# EUROPÄISCHE PATENTSCHRIFT

(11) **EP 3 074 220 B1**
(45) Veröffentlichungstag und Bekanntmachung des Hinweises auf die Patenterteilung: **01.01.2020**
(21) Anmeldenummer: 14805576.7
(22) Anmeldetag: 27.11.2014
(51) Int. Cl.: B32B 17/10, C08J 7/04, C08J 7/06, G02B 27/01, C09D 5/32, C03C 27/12

(54) **VERFAHREN ZUR HERSTELLUNG VON VERBUNDGLASLAMINATEN MIT WÄRMESTRAHLUNG ABSCHIRMENDEN EIGENSCHAFTEN**
PROCESS FOR PRODUCING A COMPOSITE GLASS LAMINATES WITH HEAT RAY SHIELDING PROPERTIES
PROCEDE DE FABRICATION DES STRATIFIÉS DE VERRE COMPOSITE AYANT DES PROPRIÉTÉS ISOLANTES CONTRE LE RAYONNEMENT THERMIQUE

(30) Priorität: 29.11.2013 EP 13195122
(43) Veröffentlichungstag der Anmeldung: 05.10.2016
(60) Teilanmeldung: 17191985.5
(73) Patentinhaber: Kuraray Europe GmbH, 65795 Hattersheim (DE)
(72) Erfinder: KELLER, Uwe, 53177 Bonn (DE)
(74) Vertreter: Janßen, Christian Oliver
(86) Internationale Anmeldenummer: PCT/EP2014/075853
(87) Internationale Veröffentlichungsnummer: WO 2015/078989

(56) Entgegenhaltungen:
- EP-A1- 2 409 833
- EP-A1- 2 767 393

## Beschreibung

### Technisches Gebiet

Die vorliegende Erfindung betrifft ein Verfahren zur Herstellung von Verbundglasscheiben mit wärmeabschirmenden Eigenschaften unter Verwendung einer Zwischenschichtfolie auf Basis von Polyvinylacetal mit einer wärmeabschirmenden Beschichtung.

Zur Herstellung von Verbundglasscheiben mit wärmeabschirmenden Eigenschaften sind u.a. Verfahren üblich, bei welchen dünne IRabsorbierend oder -reflektierend beschichtete PET-Folien zwischen mehrere Lagen weichmacherhaltiges Polyvinylacetal eingebettet werden. Nachteilig dabei ist, dass immer mindestens 3 Folienlagen (1 x funktionalisiertes PET, 2 x PVB-Folie) verwendet werden müssen, da PET mit der funktionalisierten Seite bzw. der Rückseite nicht direkt auf einer Glasoberfläche angeschmolzen werden kann.

Soweit man von diversen Beschichtungsoptionen der Glasoberfläche absieht, besteht die Alternative hierzu in der Verwendung von Zwischenschichtfolien, die im Volumen IR-Absorber enthalten. Hierfür werden beispielsweise nanoskalige Halbleiterpartikel, wie etwa ITO oder ATO, bei der Folienherstellung im Volumen der Folie möglichst gleichmäßig verteilt. Nachteilig hieran ist die eingeschränkte Recyclingfähigkeit der Folie, welche auch erhöhte Produktionskosten zur Folge hat. Ein weiterer Nachteil liegt in der Schwierigkeit, die nanoskalige Verteilung der Partikel in einer Folienmatrix während eines Extrusionsverfahrens in Anwesenheit von diversen anderen Inhaltsstoffen beizubehalten, damit Agglomeration der Nanopartikel nicht in einer inakzeptablen Trübung resultiert. Ein anderer Nachteil ist die erhöhte Komplexität der Folienherstellung, die durch Kombination des Merkmales "wärmeabsorbierend" mit weiteren Funktionsmerkmalen wie "akustischer Dämpfung", "Bandfilter", "keilförmiges Dickenprofil", "Farbton" zu einer Aufblähung des Produktsortiments beim Hersteller als auch beim Verarbeiter führt.

Als Alternative hierzu schlägt WO 2005/059013 A1 das Aufbringen von wärmeabsorbierenden Nanopartikeln durch ein Bedrucken von PVB-Folie mit speziellen Druckfarben vor. Jedoch können durch die Bedruckung die Haftungseigenschaften der Folie zur Glasoberfläche beeinträchtigt werden. Aufgrund des Umstandes, dass PVB-Folien zur problemlosen Entfernung der Luft in einem Laminationsverfahren eine aufgeraute Oberfläche aufweisen müssen, ist es warscheinlich, dass eine darauf aufgebrachte, teilweise auch im Sichtbaren absorbierende Schicht, nach Verpressen mit einer Glasoberfläche optisch uneinheitlich ist. Ausserdem ist das Bedrucken von dicken weichgemachten Folienbahnen schwierig, da sich solche Folien beim Abwicklen längen und danach wieder zurückschrumpfen können.

Weiterhin sind aus EP2409833 A1 und EP2767393 A1 Folien mit feuchtigkeitsempfindlichen Partikeln bekannt. Diesen Publikationen ist allerdings weder eine Delamination der Folien noch eine mögliche chemische Veränderung der Partikel im Kantenbereich zu entnehmen.

### Aufgabe

Aufgabe der vorliegenden Erfindung war es daher, Zwischenschichtfolien bereitzustellen, die wärmeabschirmende Eigenschaften aufweisen, ohne nanoskalige Halbleiterpartikel im Volumen der Zwischenschichtfolie dispergieren zu müssen.

Es wurde gefunden, dass dünne Folien auf Basis von weichmacherarmem bzw. -freien Polyvinylacetal mit mindestens einer darauf angeordneten wärmeabschirmenden Schicht in den typischen Herstellverfahren für Verbundglaslaminate direkt auf einer der Glasoberflächen angeschmolzen werden können. In Kombination mit mindestens einer Lage aus weichmacherhaltigem Polyvinylacetal können dann die üblichen geforderten Sicherheitseigenschaften von Verbundglaslaminaten erhalten werden.

Gegenstand der Erfindung ist daher ein Verfahren zur Herstellung von wärmeabschirmendem Verbundglaslaminat durch Verklebung von zwei transparenten Scheiben mit mindestens einer Folie A und mindestens einer Folie B wobei die Folie A und B zwischen die zwei transparenten Scheiben positioniert werden und diese miteinander verkleben, wobei Folie A ein Polyvinylacetal PA und 0 bis 16 Gew.% mindestens eines Weichmachers WA sowie eine wärmeabschirmende Beschichtung und Folie B ein Polyvinylacetal PB und mindestens 16 Gew.% mindestens eines Weichmachers WB aufweist, **dadurch gekennzeichnet, dass** die Folie A im Randbereich um mindestens 1 mm kleiner ist als mindestens eine Glasscheibe sodass die Folie B in diesem Randbereich in direktem Kontakt mit mindestens einer Glasscheibe ist.

Unter einer wärmeabschirmende Beschichtung werden Schichten aus wärmeabschirmendem Material verstanden, die auf der Oberfläche der Folie aufgebracht werden, ohne dass das wärmeabschirmende Material im Volumen der Zwischenschichtfolie dispergiert ist. Die wärmeabschirmende Beschichtung kann aus einer die Folie A vollständig oder teilweisen, flächigen Schicht bestehen, aber auch aus diskreten Strukturen wie Leiterbahnen, Drähte, hieraus aufgebaute Netzen, Punkte sowie Kombinationen daraus aufgebaut sein.

Die transparenten Scheiben können gleich oder unterschiedlich aus Glas PMMA oder Polycarbonat bestehen. Im Folgenden werden die Begriffe "Glasscheibe" oder "Glasoberfläche" synonym mit den Begriffen "transparente Scheibe" oder "Oberfläche der transparenten Scheibe" verwendet.

Das erfindungsgemäße Verfahren kann durchgeführt werden, das die Zwischenschicht auf eine transparente Scheibe positioniert wird indem Folie A auf eine transparente Scheibe positioniert wird, auf die Folie B und eine zweite transparente Scheibe gelegt werden. Alternativ ist es möglich, Folie B auf eine transparente Scheibe zu positionieren auf die dann Folie A und eine zweite transparente Scheibe gelegt wird.

In einer ersten Variante des Verfahrens können die transparenten Scheiben durch die Schichtabfolge Folie A/Folie B/Folie A miteinander verbunden d.h verklebt oder laminiert werden.

In einer zweiten Variante des Verfahrens können die transparenten Scheiben durch die Schichtabfolge Folie B/Folie A/Folie B miteinander verbunden werden.

Als wärmeabschirmend werden Beschichtungen betrachtet, welche bei vergleichender Messung und Auswertung gemäß ISO 13837:2008 (v = 14 m/s; Angabe in Prozent) in einem Testlaminat bestehend aus 2 x 2.1 mm Klarglas (z.B. Planilux™) und dazwischen angeordnet als Folie B eine Standard Automobilfolie (z.B.TROSIFOL VG R10 0.76) sowie eine Folie A ohne Beschichtung und einem entsprechend aufgebautem Laminat, in welchem Folie A eine Beschichtung aufweist, eine verringerte Total Solar Transmittance (TTS) wie folgt aufweisen:
TTS (Folie A ohne Beschichtung) - TTS (Folie A mit Beschichtung) > 10%, > 12.5%, > 15%, > 17.5% oder > 20%

Zusätzlich kann die erfindungsgemäße Beschichtung auf Folie A bei Vergleich und Gegenüberstellung der beschriebenen Testlaminate den Vorteil aufweisen, dass die Lichttransmission im (TL gemessen nach EN 410; 2011, Angabe in Prozent) durch Aufbringen der wärmeabschirmenden Beschichtung in geringerem Maße abgesenkt wird, wie der gesamte solare Energiedurchlass TTS (nach ISO 13837:2008 ,v = 14 m/s; Angabe in Prozent).

Bevorzugt besitzen erfindungsgemäß verwendete wärmeabschirmende Beschichtungen auf Folie A Quotienten von TL / TTS von mehr als 1,2 oder von mehr als 1,25 oder von mehr als 1,30 oder von mehr als 1,35 oder von mehr als 1,40 oder von mehr als 1,45.

Die Folien A weisen auf einer oder beiden Oberfläche eine wärmeabschirmende Beschichtung auf. Wärmeabschirmende Beschichtungen im Sinne der Erfindung umfassen Beschichtungen, welche Infrarotstrahlung absorbieren als auch Beschichtungen, welche Infrarotstrahlung reflektieren sowie denkbare Kombinationen beider Mechanismen in einer Beschichtung oder Kombinationen unterschiedlicher absorbierender und reflektierender Schichten.

Die wärmeabschirmende Beschichtung kann durch unterschiedliche Verfahren wie das gleichmäßige Aufbringen von flüssigen Suspensionen auf eine Folienbahn, wie z.B. dip-coating, curtaincoating, reverse gravure-coating und slot die coating aufgebracht werden. In diesen Fällen enthalten die Suspensionen und die daraus hervorgehenden wärmeabschirmenden Beschichtungen bevorzugt wärmeabsorbierende Halbleiterpartikel.

Die erfindungsgemäß eingesetzten Beschichtungen können vollständig aus wärmeabschirmendem Material wie wärmeabsorbierende Nanopartikel bestehen. Je nach Auftragungsmethode kann der Gewichtsanteil an wärmeabschirmendem Material in den wärmeabsorbierenden Beschichtungen nach Trocknen zwischen 10% - 80% und bevorzugt zwischen 30% - 60% betragen.

Alternativ zu den genannten Verfahren können wärmeabschirmende Schichten auch mit Hilfe von Druckverfahren auf die Folie A aufgebracht werden. In diesem Fall ist es auch möglich, Muster verschiedener Geometrien, z.B. rasterförmig oder in Form von Pixeln, aufzudrucken. Neben dem wärmeabsorbierenden oder / und reflektierendem Material enthalten verdruckbare oder in einem Nassbeschichtungsverfahren aufzubringende Mischungen eines oder mehrere Lösemittel sowie Bindemittel. Bevorzugt enthält das Lösemittel Wasser und oder Alkohole wie Methanol, Ethanol. Es können aber auch Ether wie etwa Butylglykol, Amide wie etwa Dimethylformamid (DMF) oder Weichmacher enthalten sein. Als Bindemittel können Polyvinylacetale, Polyvinylalkohole verschiedenen Hydrolysegrades, Acrylpolymere sowie andere Polymerisate bzw. Kondensate verwendet werden. Bevorzugt ist das Bindemittel ein Polyvinylacetal oder ein Polyvinylalkohol. Es ist besonders bevorzugt als Binder das gleiche Polyvinylacetal einzusetzen, das auch zur Herstellung der Folie A verwendet wurde.

Bei Verwendung von Halbleiterpartikeln in der wärmeabschirmenden Beschichtung können z.B. ITO, ATO, AZO, IZO, Zinkantimonate, zinndotiertes Zinkoxid, siliziumdotiertes Zinkoxid, galliumdotiertes Zinkoxid, Wolframate wie z.B. LiWO3, NaWO3, CsWO3, Lanthanhexaborid oder Cerhexaborid enthalten sein. Bevorzugt sind die genannten Materialien in Form von fein verteilten Partikeln z.B. sogenannten Nanopartikeln enthalten. Bevorzugt liegt dabei die Größe der Primärpartikel bei weniger als 1 µm.

Die erfindungsgemäß eingesetzten Beschichtungen weisen bevorzugt Schichtstärken im Bereich von 1 - 50 µm, besonders bevorzugt im Bereich von 2 - 30 µm und am meisten bevorzugt im Bereich von 3 - 15 µm auf.

Alternativ zu den genannten Verfahren können die wärmeabschirmenden Beschichtungen auch durch chemische Gasphasenabscheidung (CVD), physikalische Gaspasenabscheidung (PVD) oder Kathodenzersteubung (sputtern) oder elektrolytische Abscheidung auf der Folie A erhalten werden. Im Fall Infrarotstrahlung reflektierender Beschichtungen können diese neben optional vorhandenen dielektrischen Schichten Metalle wie Silber, Aluminium, Gold, Chrom oder Indium enthalten. Auf diese Weise erzeugte Beschichtungen weisen erfindungsgemäß eingesetzt Schichtstärken im Bereich von 0.01 - 5 µm, bevorzugt im Bereich von 0.05 - 2 µm auf.

Im Folgenden wird mit dem "Ausgangszustand" der Zustand der Folien A und B vor dem Laminieren, d.h. im noch getrennten Zustand verstanden.

Die Folien A und B können im Ausgangszustand vor dem Laminieren der Schichten als auch in dem im Verbundglaslaminat befindlichen Zwischenschichtstapel einen einzigen Weichmacher als auch Gemische von Weichmachern sowohl unterschiedlicher und gleicher Zusammensetzung enthalten. Mit unterschiedlicher Zusammensetzung ist sowohl die Art der Weichmacher als auch deren Anteil im Gemisch gemeint. Bevorzugt weisen die Folie A und Folie B nach dem laminieren d.h. im fertig gestellten Verbundglas den gleichen Weichmacher WA und WB auf. In einer bevorzugten Variante enthält die Folie A in ihrem Ausgangszustand aber keinen Weichmacher und nach dem Laminieren den Weichmacher WB.

Erfindungsgemäß verwendete weichmacherhaltige Folien B enthalten im Ausgangszustand vor dem Laminieren der Schichten mindestens 16 Gew%, wie 16.1 - 36.0 Gew.%, bevorzugt 22.0 - 32.0 Gew.% und insbesondere 26.0 - 30.0 Gew.% Weichmacher.

Erfindungsgemäß verwendete Folien A können im Ausgangszustand vor dem Laminieren der Schichten weniger als 16 Gew.% (wie 15.9 Gew.%), weniger als 12 Gew.-%, weniger als 8 Gew.-%, weniger als 6 Gew.-%, weniger als 4 Gew.-%, weniger als 3 Gew.-%, weniger als 2 Gew.-%, weniger als 1 Gew-%, jeweils mit der Untergrenze 0 Gew.% an mindestens einem Weichmacher WA enthalten. Bevorzugt enthalten die weichmacherarmen Folien A 0,0 - 8 Gew.-% mindestens eines Weichmachers WA.

Im erfindungsgemäßen Verfahren weist die Folie A im Ausgangszustand vor dem Laminieren der Schichten eine Dicke von nicht mehr als 20%, bevorzugt 15% und bevorzugt nicht mehr als 10% der Dicke der Folie bzw. der Folien B auf. Die Dicke der Folie A schließt die wärmeabschirmende Beschichtung mit ein.

Die Dicke einer Folie A im Ausgangszustand vor dem Laminieren der Schichten beträgt 10 - 150 µm, bevorzugt 20 - 120 µm, bevorzugt 30 - 100 µm, bevorzugt 40 - 80 µm und am meisten bevorzugt 50 - 70 µm. Im Verbundglas nimmt die Dicke der Folie durch Übergang von Weichmacher aus Folie B zu.

Die Folie A wird separat von Folie B hergestellt (z.B. extrudiert und weist entweder gar keinen Weichmacher oder einen so geringen Weichmacheranteil auf, dass sie bei der Herstellung und Weiterverarbeitung unter mechanischer Beanspruchung sich weder zu stark dehnt noch zu klebrig ist.

Die Dicke einer Folie B beträgt im Ausgangszustand 450 - 2500 µm, bevorzugt 600 - 1000 µm, bevorzugt 700 - 900 µm. Bei Verwendung mehrerer Folien B gilt entsprechendes für deren Gesamtdicke. Werden Folien B vor Herstellung des Sandwiches gereckt und / oder zusätzlich der Form einer Scheibe (z.B. Windschutzscheibe) bogenförmig angepasst, können sich die angegebenen Dicken zum Zeitpunkt der Lamination noch einmal um bis zu 20% verringern. Mindestens eine dünne, Folie A mit der wärmedämmenden Beschichtung ist zu einer Glasoberfläche des erfindungsgemäßen Verbundglaslaminats orientiert. Die Folie A kann hierbei mit der Oberfläche, welche die wärmedämmende Beschichtung aufweist oder der Oberfläche, welche die wärmedämmende Beschichtung nicht aufweist, auf die Glasoberfläche aufgebracht werden.

Es ist auch möglich, auf beide Glasoberflächen jeweils eine Folie A aufzubringen, so dass ein Verbundglaslaminat mit einer Schichtabfolge Glass/Folie A/ Folie B/ Folie A / Glass vorliegt. Hierbei kann die Dekoration der Folien A gleich oder unterschiedlich sein. Beispielsweise kann dabei eine der Folien A die wärmedämmende Beschichtung aufweisen und die zweite Folie A andere Schichten mit optischen oder elektrischen Funktionen aufweisen.

Bei Automobilverglasung ist es aus ästhetischen und Dauerhaftigkeitsgründen nicht bevorzugt, die Kanten der Verbundglaslaminate mit Dichtstoffen zu versiegeln. Dies begünstigt die Anfälligkeit solcher Verglasungen gegenüber Ausbildung von Kantendefekten wie etwa Ablösungen der Schichten untereinander (Delaminationen) oder Korrosion bzw. chemischer Veränderung einer bis zur Kante des Laminates reichenden IRreflektierenden bzw. -absorbierenden Schicht.

Im erfindungsgemäßen Verfahren kann die weichmacherarme Folie A so zugeschnitten und positioniert werden, dass sie im Verbundglaslaminat nicht überall bis zum Rand des Laminates reicht. Daher ist die Folie A im Randbereich um mindestens 1 mm kleiner als mindestens eine Glasscheibe, sodass die Folie B in diesem Randbereich in direktem Kontakt mit mindestens einer Glasscheibe ist.

Weiterhin kann die dünne, im Ausgangszustand weichmacherarme oder weichmacherfreie Folie A vor dem Einlegen in den Glas / Foliensandwich perforiert werden, so dass sie Aussparungen wie Durchbrüche, Löcher, Schlitze in beliebigen geometrischen Mustern aufweisen kann.

So kann die Folie A mindestens eine Aussparung aufweisen, sodass die Folie B durch diese Aussparung in direktem Kontakt mit mindestens einer Glasscheibe ist. Nach dem Verkleben zum fertigen Verbundglas ist die Folie B mit im Ausgangszustand höherem Weichmachergehalt an diesen Stellen mit den Glasscheiben ohne Unterbrechung verklebt. Insbesondere können so Aussparungen an Stellen des Verbundglases erhalten werden, hinter welchen Sensor-, Optik-, Antennenelemente ansonsten durch eine wärmeabschirmende Schicht in ihrer Funktion beeinträchtigt werden würden.

Die erfindungsgemäß eingesetzten Folien A und B enthalten Polyvinylacetale, welche durch Acetalisierung von Polyvinylalkohol oder Ethylen-Vinylalkohol-Copolymer hergestellt werden.

Die Folien können Polyvinylacetale mit jeweils unterschiedlichem Polyvinylalkoholgehalt, Acetalisierungsgrad, Restacetatgehalt, Ethylenanteil, Molekulargewicht bzw. unterschiedlichen Kettenlängen des Aldehydes der Acetalgruppen enthalten.

Insbesondere können die zur Herstellung der Polyvinylacetale eingesetzten Aldehyde oder Ketoverbindungen linear oder verzweigt (d.h. vom "n" oder "iso"-Typs) mit 2 bis 10 Kohlenstoffatomen sein, was zu entsprechenden linearen oder verzweigten Acetalgruppen führt. Die Polyvinylacetale werden entsprechend als "Polyvinyl(iso)acetale" oder "Polyvinyl(n)acetale" bezeichnet.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Die zur Herstellung der Polyvinylacetale in den Folien A oder B verwendeten Polyvinylalkohole oder Ethylen-Vinylalkohol-Copolymere können jeweils gleich oder unterschiedlich, rein oder eine Mischung von Polyvinylalkoholen oder Ethylen-Vinylalkohol-Copolymere mit unterschiedlichem Polymerisationsgrad oder Hydrolysegrad sein.

Der Polyvinylacetatgehalt der Polyvinylacetale in den Folien A oder B kann durch Verwendung eines zu einem entsprechenden Grad verseiften Polyvinylalkohols oder Ethylen-Vinylalkohol-Copolymer eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Schicht ändern. Es ist auch möglich, die Acetalisierung der Polyvinylalkohole oder Ethylen-Vinylalkohol-Copolymere mit einem Gemisch aus mehreren Aldehyden oder Ketoverbindungen durchzuführen.

Bevorzugt enthalten die Folien A oder B Polyvinylacetale mit einem Anteil an Polyvinylacetatgruppen bezogen auf die Schichten jeweils gleich oder unterschiedlich 0.1 bis 20 Mol%, bevorzugt 0,5 bis 3 Mol% oder 5 bis 8 Mol%.

Der Polyvinylalkoholgehalt der verwendeten Polyvinylacetale PA der im Ausgangszustand weichmacherärmeren Folie A kann zwischen 6 - 26 Gew.-%, 8 - 24 Gew.-%, 10 - 22 Gew.-%, 12 - 21 Gew.-%, 14 - 20 Gew.-%, 16 - 19 Gew.-% und bevorzugt zwischen 16 und 21 Gew.-% oder 10 - 16 Gew.-% betragen.

Der Polyvinylalkoholgehalt der verwendeten Polyvinylacetale PB der im Ausgangszustand weichmacherreicheren Folie B kann zwischen 14 - 26 Gew.-%, 16 - 24 Gew.-%, 17 - 23 Gew.-% und bevorzugt zwischen 18 und 21 Gew.-% betragen.

Die Folien A oder B enthalten bevorzugt unvernetztes Polyvinylacetal. Der Einsatz von vernetzten Polyvinylacetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Die erfindungsgemäß eingesetzten Folien A und/oder B können als Weichmacher WA oder WB eine oder mehrere Verbindungen ausgewählt aus folgenden Gruppen enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat
- Ester oder Ether von mehrwertigen aliphatischen oder aromatischen Alkoholen oder Oligoetherglykolen mit einem oder mehreren unverzweigen oder verzweigten aliphatischen oder aromatischen Substituenten, wie z.B. Estern von Glycerin, Di-, Tri- oder Tetraglykolen mit linearen oder verzweigten aliphatischen oder cycloaliphatischen Carbonsäuren; Als Beispiele für letztere Gruppe können Diethylenglykol-bis-(2-ethyl-hexanoat), Triethylenglykol-bis-(2-ethylhexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether und/oder Dipropylenglykolbenzoat dienen

- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Per Definition sind Weichmacher hochsiedende organische Flüssigkeiten. Aus diesem Grund können auch weitere Arten von organischen Flüssigkeiten mit einem Siedepunkt höher als 120 °C als Weichmacher verwendet werden.

Besonders bevorzugt enthalten die Folien A in den Varianten, bei welchen in Folie A im Ausganszustand ein Weichmacher WA vorhanden ist sowie Folien B 1,2-Cyclohexandicarbonsäurediisononylester (DINCH) oder Triethylenglykol-bis-2-ethylhexanoat (3GO bzw. 3G8) als Weichmacher.

Zusätzlich können die Folien A und B weitere Zusätze enthalten wie Restmengen an Wasser, UV-Absorber, Antioxidantien, Haftungsregulatoren, optische Aufheller bzw. fluoreszierende Zusätze, Stabilisatoren, Farbmittel, Verarbeitungshilfsmittel, organische oder anorganische Nanopartikel, pyrogene Kieselsäure und/oder oberflächenaktive Stoffe enthalten. Insbesondere kann Folie B als Haftungsregulatoren 0,001 bis 0,1 Gew.% Alkali- und/oder Erdalkalisalze von Carboxylsäuren aufweisen.

Zur Unterdrückung von Korrosionseffekten der über Folie A in das Verbundglas eingebrachten wärmedämmenden Beschichtung, insbesondere bei Verwendung von metallischen Leitermaterialien wie z.B. Silber, kann es hilfreich sein, ein Korrosionsschutzmittel im fertigen Laminat bereitzustellen. Bevorzugt kann das Korrosionsschutzmittel vor Lamination in Folie B enthalten sein und während und nach der Verklebung mit Folie A durch Diffusion auch in die dünnere Folie A bzw. in den Bereich von deren Beschichtung übergehen.

Alternativ ist das Korrosionsschutzmittel vor Lamination bereits in Folie A enthalten. Bevorzugt werden Korrosionsschutzmittel in Anteilen von 0.005 - 5 Gew.-% in Folie B oder / und A eingesetzt. Bevorzugt werden als Korrosionsschutzmittel unsubstituierte oder substituierte Benzotriazole verwendet.

Zur Vermeidung von Korrosion an der wärmedämmenden Beschichtung ist bevorzugt, das Folie A weniger als 150 ppm Chloridionen und/oder Nitrationen und/oder Sulfationen aufweist.

So ist der Chloridgehalt der Folie A geringer als 150 ppm, bevorzugt geringer als 100 ppm und insbesondere geringer als 50 ppm sein. Im Idealfall beträgt der Chloridgehalt der Folie A weniger als 10 ppm oder sogar 0 ppm.

Optional kann der Nitratgehalt der Folie A Folie weniger als 150 ppm betragen, bevorzugt weniger als 100 ppm und insbesondere weniger als 50 ppm betragen. Im Idealfall beträgt der Nitratgehalt der Folie A weniger als 10 ppm oder sogar 0 ppm.

Wiederum optional kann der Sulfatgehalt der Folie A Folie weniger als 150 ppm betragen, bevorzugt weniger als 100 ppm und insbesondere weniger als 50 ppm betragen. Im Idealfall beträgt der Sulfatgehalt der Folie A weniger als 10 ppm oder sogar 0 ppm.

Zusätzlich kann Folie A mehr als 0 ppm Magnesiumionen aufweisen. Bevorzugt beträgt der Magnesiumgehalt mehr als 5 ppm besonders bevorzugt 10 ppm, insbesondere 5 - 20 ppm

Es ist erfindungsgemäß möglich, zunächst die Folie A auf eine Glasscheibe durch erhöhte Temperatur vollflächig oder lokal anzuschmelzen und dann mit der Folie B abzudecken. Alternativ können die Folien A und B gemeinsam zwischen zwei Glasscheiben positioniert werden und bei erhöhter Temperatur verschmolzen werden.

Die Verklebung der transparenten Scheiben durch die Folien A und B d.h. der Laminationsschritt zur Herstellung eines Verbundglases wird bevorzugt so durchgeführt, dass die Folien A und B zwischen zwei Glasscheiben positioniert werden und der so vorbereitete Schichtkörper unter erhöhtem oder vermindertem Druck und erhöhter Temperatur zu einem Laminat verpresst wird.

Zur Laminierung des Schichtkörpers können die dem Fachmann geläufigen Verfahren mit und ohne vorhergehender Herstellung eines Vorverbundes eingesetzt werden.

Sogenannte Autoklavenprozesse werden bei einem erhöhten Druck von ca. 10 bis 15 bar und Temperaturen von 100 bis 145 °C über ca. 2 Stunden durchgeführt. Vakuumsack- oder Vakuumringverfahren z.B. gemäß EP 1 235 683 B1 arbeiten bei ca. 200 mbar und 130 bis 145 °C

Es sind auch sog. Vakuumlaminatoren einsetzbar. Diese bestehen aus einer beheizbaren und evakuierbaren Kammer, in denen Verbundverglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Im einfachsten Fall wird zur Herstellung der Verbundglaslaminate Folie A oder B auf eine Glasscheibe positioniert und hierzu synchron oder darauffolgend die weitere Folie B bzw. A. Im Anschluss daran wird die zweite Glasscheibe aufgelegt und ein Glasfolienverbund erzeugt. Überschüssige Luft kann danach mithilfe eines beliebigen dem Fachmann bekannten Vorverbundverfahrens entfernt werden. Hierbei erfolgt auch bereits ein erstes leichtes Verkleben der Schichten untereinander sowie mit dem Glas.

Der Glasfolienverbund kann abschließend einem Autoklavenprozess unterworfen werden. Bevorzugt wird Folie A auf der ersten Glasscheibe positioniert und mit der dickeren Folie B bedeckt, bevor die zweite Glasscheibe aufgelegt wird. Das Verfahren kann in vielen denkbaren und grundsätzlich praktikablen Varianten durchgeführt werden. Beispielsweise wird Folie A einfach von einer Rolle entsprechender Breite entnommen wogegen Folie B vorher auf Maß des herzustellenden Verbundglases zugeschnitten wurde. Dies ist insbesondere im Fall von Windschutzscheiben und anderen Automobilverglasungsteilen von Vorteil. In diesem Fall ist es besonders vorteilhaft, die dickere Folie B vor Zuschnitt zusätzlich noch zu Recken. Dies ermöglicht einen sparsameren Folieneinsatz bzw. für den Fall, dass Folie B ein Farbkeil aufweist, das Anpassen von dessen Krümmung an den oberen Scheibenrand.

Im Automobilbereich, insbesondere zur Herstellung von Windschutzscheiben werden häufig Folien verwendet, die im oberen Bereich ein sog. Farbband aufweisen. Hierzu kann entweder der obere Teil der Folien A und B mit einer entsprechend eingefärbten Polymerschmelze coextrudiert werden oder es kann in einem Mehrschichtsystem eine der Folien A und B in Teilbereichen eine unterschiedliche Färbung aufweisen. In der vorliegenden Erfindung ist dies durch vollständiges oder teilweises Einfärben zumindest einer der Folien A und B realisierbar.

Erfindungsgemäß können die Folien B daher einen Farbkeil aufweisen, welcher insbesondere bereits in einem vorgelagerten Prozessschritt der Geometrie einer Windsschutzscheibe angepasst wurde.

Es auch möglich das die Folien B ein keilförmige Dickenprofil besitzen. Hierdurch erhält das erfindungsgemäße Verbundglaslaminat selbst bei planparallelem Dickenprofil der Folie A ein keilförmige Dickenprofil und kann in KFZ-Windschutzscheiben für HUD Displays eingesetzt werden.

Im einfachsten Fall ist die Folie B eine handelsüblichen PVB-Folie mit oder ohne Farbband und mit oder ohne keilförmigen Dickenprofil. Ebenfalls können Folien B mit darin zum IR-Schutz dispergierten Nanopartikeln als auch gefärbte Folien verwendet werden. Natürlich kann eine Folie B auch eine Folie mit Akustikfunktion sein, so dass durch Kombination mit einer Folie A verbesserte Schalldämmeigenschaften erhalten werden. Natürlich kann eine Folie B bereits auch mehrere der genannten Funktionen in sich vereinen.

Die Herstellung der dünnen Folien A erfolgt in der Regel durch Extrusion unter Verwendung einer Cast-Film Linie oder als Blasfolie. Hierbei kann eine Oberflächenrauhigkeit durch kontrollierten Fließbruch oder beim Cast-Film Verfahren zusätzlich durch Verwendung einer strukturierten Chillroll erfolgen.

Zusätzlich kann einer bereits hergestellten Folie durch einen Prägevorgang zwischen mindestens einem Walzenpaar eine regelmäßige, nicht stochastische Rauhigkeit aufgeprägt werden.

Bevorzugt weisen erfindungsgemäß verwendete Folien eine einseitige Oberflächenstruktur mit einer Rauhigkeit Rz von 0 bis 25 µm, bevorzugt Rz von 1 bis 20 µm, besonders bevorzugt Rz von 3 bis 15 µm und insbesondere Rz von 4 bis 12 µm auf. Besonders bevorzugt ist, wenn die mit der Glasscheibe in Kontakt kommende Seite der Folie A eine Oberflächenrauhigkeit Rz von nicht mehr als 20% ihrer Dicke aufweist. Die mit der wärmeabschirmenden Beschichtung versehene Oberfläche weist vor Aufbringen der Beschichtung bevorzugt eine besonders geringe Oberflächenrauhigkeit auf. Insbesondere beträgt hier der Rauhigkeitsparameter Ra weniger als 3 µm und Rz weniger als 5 µm.

### Beispiele

Die Folien für die (Vergleichs) Beispiele 1 - 4 wurden auf einem Kleinextruder mit Kühlwalzeneinheit in Breite 35 cm in den angegebenen Dicken mit den angegebenen Mengen und Typen an Weichmacher hergestellt. Das verwendete Polyvinylbutyral (Mowital® B60H der Firma Kuraray Europe GmbH) wies einen PVOH-Gehalt von 19,8 Gew.-% und einen Restacetat von 1 Gew.-% auf.

Die Ausgangsfolien A wurden per Hand mit den in der Tabelle angeführten Beschichtung versehen (Beispiele 2, 3, 4). Die Auftragung erfolgte in Suspension mit einer Laborrakel und führte nach Trocknung zu einer Schichtdicke der Beschichtung von ca. 5 µm. Die Folien wurden vor der weiteren Verarbeitung in einem Klima von 23°C/23% rF gelagert.

TROSIFOL VG R10 0.76 ist eine handelsübliche ungefärbte, Standardautomobilfolie mit gleichmäßigem Dickenprofil zur Lamination von Windschutzscheiben in einer Dicke von 760 µm, mit einem Weichmachergehalt von 27,5 Gew.-%. Die zur Produktion verwendete PVB-Charge wies einen PVOH-Gehalt von 20,3 Gew.-% auf. Die Glasübergangstemperatur (TB) wurde zu 19,2 °C gemessen.

Vor Verlegung wurden aller Folien 24h in einem Klima von 23°C/23% rF gelagert. Zur Herstellung der Testlaminate wurden plane Gläser vom Typ Planilux® in 2.1 mm Dicke und mit 30 x 30 cm Kantenlänge mit einer industrieüblichen Glaswaschmaschine gewaschen.

Die unteren Scheiben wurde auf einem Verlegetisch platziert und die Folien A der Beispiele 1 - 4 jeweils von einer Rolle abwickelnd darüber positioniert. Als nächstes wurde eine Lage der Folie B (TROSIFOL VG R10) darüber gelegt, bevor der Sandwich durch Auflegen der oberen Planilux-Scheibe komplettiert wurde. Überstehende Folie wurde mit einem scharfen Messer kantenbündig abgetrennt. Die Sandwichs wurden durch eine industrieübliche Walzenvorverbundanlage vorverbunden, so dass die Glasoberflächentemperatur bei Austritt aus der Anlage 65°C betrug, und abschließend während 90 Minuten in einem Autoklaven bei maximal 140 °C und 12 bar Druck zum Endverbund verklebt.

Durch Kombination der wärmeabschirmend beschichteten Folien A der Beispiele 2 - 4 mit der handelsüblichen Standardfolie TROSIFOL VG R10 (Folie B) konnten somit auf einfache Weise Testlaminate mit guten wärmeabschirmenden Eigenschaften hergestellt werden. An den Testlaminaten wurden Lichttranmission gemäß EN 410 und Total Solar Transittance (TTS, v=14 m/s) gemäß ISO 13837 bestimmt.

**Tabelle 1**

| | Vergleich 1 | Beispiel 2 | Beispiel 3 | Beispiel 4 | Vergleich/ Beispiele 1 - 4 |
|---|---|---|---|---|---|
| Folie | A | A | A | A | B |
| Polyvinylbutyral Gew% | 100 | 100 | 100 | 95 | 72,5 |
| PVOH (Gew.-%, bezogen auf PVB) | 19,8 | 19,8 | 19,8 | 19,8 | 20,3 |
| Weichmacher 3G8 Gew% | 0 | 0 | - | - | 25 |
| HEXAMOLL® DINCH Gew% | - | - | 0 | 5 | - |
| Weichmacher DBEA Gew% | | | | | 2,5 |
| Beschichtung | keine | ATO | ITO | ITO | - |
| Bindemitteltyp | - | PVA | PVB | PVB | - |
| Dicke der Folie (µm) | 40 | 45 | 52 | 66 | 760 |
| Tg im Ausgangszustand (°C) | 68 | 68 | 68 | 61 | 19,2 |
| TL (EN 410) in % | 89,9 | 78,8 | 84,5 | 82,3 | - |
| TTS (ISO 13837) in % | 79,7 | 61,5 | 61,8 | 59,0 | - |

## Patentansprüche

1. Verfahren zur Herstellung von wärmeabschirmendem Verbundglaslaminat durch Verklebung von zwei transparenten Scheiben mit mindestens einer Folie A und mindestens einer Folie B wobei die Folie A und B zwischen die zwei transparenten Scheiben positioniert werden und diese miteinander verkleben, wobei Folie A ein Polyvinylacetal PA und 0 bis 16 Gew.% mindestens eines Weichmachers WA sowie eine wärmeabschirmende Beschichtung und Folie B ein Polyvinylacetal PB und mindestens 16 Gew.% mindestens eines Weichmachers WB aufweist, **dadurch gekennzeichnet, dass** die Folie A im Randbereich um mindestens 1 mm kleiner ist als mindestens eine Glasscheibe sodass die Folie B in diesem Randbereich in direktem Kontakt mit mindestens einer Glasscheibe ist und dass die Folie A weniger als 150 ppm Chloridionen aufweist.

2. Verfahren nach Anspruch 1 **dadurch gekennzeichnet, dass** die wärmeabschirmende Beschichtung der Folie A ITO, ATO, AZO, IZO, Zinkantimonate, zinndotiertes Zinkoxid, siliziumdotiertes Zinkoxid, galliumdotiertes Zinkoxid, LiWO₃, NaWO₃, CsWO₃, Lanthanhexaborid oder Cerhexaborid enthält.

3. Verfahren nach Anspruch 2, **dadurch gekennzeichnet, dass** die wärmeabschirmende Beschichtung eine Dicke von 1 bis 50 µm aufweist.

4. Verfahren nach Anspruch 1, **dadurch gekennzeichnet, dass** die wärmeabschirmende Beschichtung der Folie A Silber, Aluminium, Gold, Chrom oder Indium enthält.

5. Verfahren nach Anspruch 4 **dadurch gekennzeichnet, dass** die wärmeabschirmende Beschichtung eine Dicke von 0.01 - 5 µm aufweist.

6. Verfahren nach einem der Ansprüche 1 bis 5 **dadurch gekennzeichnet, dass** die Folie A ein Polyvinylacetal PA mit einem Anteil an Vinylalkoholgruppen von 6 bis 26 Gew.% und die Folie B ein Polyvinylacetal PB mit einem Anteil an Vinylalkoholgruppen von 14 bis 26 Gew.% aufweist.

7. Verfahren nach einem der Ansprüche 1 bis 8 **dadurch gekennzeichnet, dass** die Folie A mindestens eine Aussparung aufweist, sodass die Folie B durch diese Aussparung in direktem Kontakt mit mindestens einer Glasscheibe ist.

8. Verfahren nach einem der Ansprüche 1 bis 8 **dadurch gekennzeichnet, dass** die Folie B aus mindestens zwei Teilfolien B' und B" besteht, die einen unterschiedlichen Weichmachergehalt aufweisen.

9. Verfahren nach einem der Ansprüche 1 bis 8 **dadurch gekennzeichnet, dass** die Folie B ein keilförmiges Dickenprofil aufweist.

10. Verfahren nach einem der Ansprüche 1 bis 9 **dadurch gekennzeichnet, dass** die Folie B einen farbigen Teilbereich aufweist.

11. Verfahren nach einem der Ansprüche 1 bis 10 **dadurch gekennzeichnet, dass** Folie A weniger als 150 ppm Nitrationen und/oder Sulfationen aufweist.

12. Verfahren nach einem der Ansprüche 1 bis 11 **dadurch gekennzeichnet, dass** Folie A mehr als 0 ppm Magnesiumionen aufweist.

13. Verfahren nach einem der Ansprüche 1 bis 12 **dadurch gekennzeichnet, dass** die transparenten Scheiben durch die Schichtabfolge Folie A/Folie B/Folie A miteinander verbunden werden.

14. Verfahren nach einem der Ansprüche 1 bis 12 **dadurch gekennzeichnet, dass** die transparenten Scheiben durch die Schichtabfolge Folie B/Folie A/Folie B miteinander verbunden werden.

## Claims

1. A process for the production of heat-shielding laminated glass composites by means of the lamination of two transparent panes with at least one film A and at least one film B, wherein the films A and B are positioned between the two transparent panes and laminate them together, wherein film A comprises a polyvinyl acetal PA and 0 to 16% by weight of at least one plasticizer WA as well as a heat-shielding coating, and film B comprises a polyvinyl acetal PB and at least 16% by weight of at least one plasticizer WB, **characterized in that** in the edge region, film A is at least 1 mm smaller than at least one glass pane in a manner such that film B is in direct contact with at least one glass pane in this edge region, and **in that** film A comprises less than 150 ppm of chloride ions.

2. The process as claimed in claim 1, **characterized in that** the heat-shielding coating of film A contains ITO, ATO, AZO, IZO, zinc antimonate, tin-doped zinc oxide, silicon-doped zinc oxide, gallium-doped zinc oxide, LiWO₃, NaWO₃, CsWO₃, lanthanum hexaboride or cerium hexaboride.

3. The process as claimed in claim 2, **characterized in that** the heat-shielding coating has a thickness of from 1 to 50 µm.

4. The process as claimed in claim 1, **characterized in that** the heat-shielding coating of film A contains silver, aluminium, gold, chromium or indium.

5. The process as claimed in claim 4, **characterized in that** the heat-shielding coating has a thickness of 0.01-5 µm.

6. The process as claimed in one of claims 1 to 5, **characterized in that** film A comprises a polyvinyl acetal PA with a proportion of vinyl alcohol groups of 6% to 26% by weight and film B comprises a polyvinyl acetal PB with a proportion of vinyl alcohol groups of 14% to 26% by weight.

7. The process as claimed in one of claims 1 to 8, **characterized in that** film A has at least one recess, such that film B is in direct contact with at least one glass pane through this recess.

8. The process as claimed in one of claims 1 to 8, **characterized in that** film B comprises at least two secondary films B' and B" which have different plasticizer contents.

9. The process as claimed in one of claims 1 to 8, **characterized in that** film B has a wedge-shaped thickness profile.

10. The process as claimed in one of claims 1 to 9, **characterized in that** film B comprises a coloured section.

11. The process as claimed in one of claims 1 to 10, **characterized in that** film A comprises less than 150 ppm of nitrate ions and/or sulphate ions.

12. The process as claimed in one of claims 1 to 11, **characterized in that** film A comprises more than 0 ppm of magnesium ions.

13. The process as claimed in one of claims 1 to 12, **characterized in that** the transparent panes are connected to each other in the layer sequence film A/film B/film A.

14. The process as claimed in one of claims 1 to 12, **characterized in that** the transparent panes are connected to each other in the layer sequence film B/film A/film B.

## Revendications

1. Procédé de fabrication d'éléments de verre feuilleté aux propriétés d'écran thermique, consistant à coller deux vitres transparentes l'une à l'autre au moyen d'au moins une feuille A et d'au moins une feuille B, les feuilles A et B étant positionnées entre des deux vitres transparentes pour ensuite les coller l'une à l'autre, la feuille A comportant un acétal de polyvinyle (PA) et 0 à 16 % en poids d'au moins un plastifiant WA ainsi qu'un revêtement aux propriétés d'écran thermique, et la feuille B comportant un acétal de polyvinyle PB et au moins 16 % d'au moins un plastifiant, **caractérisé en ce que** la feuille A présente en sa zone marginale une taille inférieure d'au moins 1 mm par rapport à au moins une vitre, faisant en sorte que la feuille B soit, dans cette zone marginale, en contact direct avec au moins une vitre et que la teneur de la feuille A en ions de chlorure est inférieure à 150 ppm.

2. Procédé selon la revendication 1, **caractérisé en ce que** le revêtement aux propriétés d'écran thermique de la feuille A contient de l'ITO, de l'ATO, de l'AZO, de l'IZO, de l'antimoniate de zinc, de l'oxyde de zinc dopé à l'étain, de l'oxyde de zinc dopé au silicium, de l'oxyde de zinc dopé au gallium, du LiWO₃, du NaWO₃, du CsWO₃, de l'hexaborure de lanthane ou de l'hexaborure de cérium.

3. Procédé selon la revendication 2, **caractérisé en ce que** le revêtement aux propriétés d'écran thermique présente une épaisseur comprise entre 1 et 50 µm.

4. Procédé selon la revendication 1, **caractérisé en ce que** le revêtement aux propriétés d'écran thermique de la feuille A contient de l'argent, de l'aluminium, de l'or, du chrome ou de l'indium.

5. Procédé selon la revendication 4, **caractérisé en ce que** le revêtement aux propriétés d'écran thermique présente une épaisseur comprise entre 0,01 et 5 µm.

6. Procédé selon l'une des revendications 1 à 5, **caractérisé en ce que** la feuille A comporte un acétal de polyvinyle PA ayant une proportion de groupes d'alcool vinylique comprise entre 6 et 26 % en poids et la feuille B comporte un acétal de polyvinyle PB ayant une proportion de groupes d'alcool vinylique comprise entre 14 et 26 % en poids.

7. Procédé selon l'une des revendications 1 à 8, **caractérisé en ce que** la feuille A présente au moins un évidement, de manière à ce qu'à travers ledit évidement, la feuille B soit en contact direct avec au moins une vitre.

8. Procédé selon l'une des revendications 1 à 8, **caractérisé en ce que** la feuille B est constituée d'au moins deux feuilles partielles B' et B" présentant des teneurs en plastifiant différentes.

9. Procédé selon l'une des revendications 1 à 8, **caractérisé en ce que** la feuille B présente un profil d'épaisseur en forme de cale.

10. Procédé selon l'une des revendications 1 à 9, **caractérisé en ce que** ladite feuille B comporte une zone partielle colorée.

11. Procédé selon l'une des revendications 1 à 10, **caractérisé en ce que** la feuille A comporte moins de 150 ppm d'ions de nitrate et/ou d'ions de sulfate.

12. Procédé selon l'une des revendications 1 à 11, **caractérisé en ce que** la teneur de la feuille A en ions de magnésium est supérieure à 0 ppm.

13. Procédé selon l'une des revendications 1 à 12, **caractérisé en ce que** les vitres transparentes sont reliées l'une à l'autre par une succession de couches de type feuille A / feuille B / feuille A.

14. Procédé selon l'une des revendications 1 à 12, **caractérisé en ce que** les vitres transparentes sont reliées l'une à l'autre par une succession de couches de type feuille B / feuille A / feuille B.
